# EUROPEAN PATENT APPLICATION

(11) **EP 4 395 217 A1**
(43) Date of publication of application: **03.07.2024**
(21) Application number: 22877852.8
(22) Date of filing: 15.09.2022
(51) Int. Cl.: H04L 5/00, H04W 36/00, H04W 76/27

(54) **COMMUNICATION METHOD AND RELATED PRODUCT**

(30) Priority: 09.10.2021 CN 202111176882
(71) Applicant: Huawei Technologies Co., Ltd., Shenzhen, Guangdong 518129 (CN)
(72) Inventor: XIA, Limin, Shenzhen, Guangdong 518129 (CN); CHENG, Yan, Shenzhen, Guangdong 518129 (CN); PAN, Qing, Shenzhen, Guangdong 518129 (CN); XU, Hao, Shenzhen, Guangdong 518129 (CN); CAO, Nianwei, Shenzhen, Guangdong 518129 (CN); ZHANG, Liwen, Shenzhen, Guangdong 518129 (CN)
(74) Representative: Pfenning, Meinig & Partner mbB
(86) International application number: PCT/CN2022/119020
(87) International publication number: WO 2023/056832

(57) **Abstract**

Embodiments of this application disclose a communication method and a related product, and may be specifically applied to the communication field in the field of electronic technologies. The communication method is applied to a network device, and includes: performing transmission of first-type data via a primary carrier cell PCC, and performing transmission of second-type data via a secondary carrier cell SCC, where the first-type data includes control plane data, and the second-type data includes user plane data; or the first-type data includes uplink data, and the second-type data includes downlink data; or the first-type data includes downlink data, and the second-type data includes uplink data. This application may reduce communication resource waste, and improve communication resource utilization.

## Description

This application claims priority to Chinese Patent Application No. 202111176882.3, filed with the China National Intellectual Property Administration on October 9, 2021 and entitled "COMMUNICATION METHOD AND RELATED PRODUCT", which is incorporated herein by reference in its entirety.

### TECHNICAL FIELD

This application relates to the field of electronic technologies, and in particular, to a communication method and a related product.

### BACKGROUND

With the development of science and technology and the progress of society, to provide a higher service rate, the 3^{rd} generation partnership project (3^{rd} Generation Partnership Project) 3GPP introduces a carrier aggregation (Carrier Aggregation, CA for short) function, aggregates a plurality of contiguous or non-contiguous component carriers (Component Carriers, CCs for short) into larger bandwidth, and provides a dual connectivity (Dual Connectivity) function. Resources and advantages of different carriers and different RATs are fully used to improve user experience on uplink and downlink peak rates.

However, in an existing network architecture, in a CA scenario, both a control plane and a user plane are carried on a primary carrier cell PCC, and then user plane data is offloaded, through an RLC layer of the PCC, to a secondary carrier cell SCC for sending. Similarly, in the CA scenario, an uplink and a downlink are both carried on a same carrier cell (the PCC or the SCC). In a dual connectivity DC (Dual Connectivity) scenario, an uplink and a downlink are both carried on a same carrier group (a main carrier group MCG or a secondary carrier group SCG).

In such a multi-carrier (CA or DC) scenario, the control plane and user plane, or the uplink and downlink are strongly coupled (carried on a same carrier). As a result, when a carrier capability difference is large, for example, when a carrier capability of the SCC is far greater than a carrier capability of the PCC, the SCC may carry most of traffic. Therefore, traffic carried on a user plane of the PCC needs to be offloaded to the SCC through the RLC layer of the PCC. An offloading process increases an additional path and causes a path delay, and the path may limit the traffic offloaded to the SCC. In this case, resource usage maximization based on a service requirement cannot be performed.

### SUMMARY

This application provides a communication method and a related product, to reduce communication resource waste, and improve communication resource utilization.

According to a first aspect, an embodiment of this application provides a communication method, applied to a network device, where the method includes: performing transmission of first-type data via a primary carrier cell PCC, and performing transmission of second-type data via a secondary carrier cell SCC, where the first-type data includes control plane data, and the second-type data includes user plane data; or the first-type data includes uplink data, and the second-type data includes downlink data; or the first-type data includes downlink data, and the second-type data includes uplink data.

Embodiments of this application are applied to a carrier aggregation CA scenario. When an architecture in which a user plane and a control plane, or an uplink and a downlink are separated is used, an original case in which the control plane and the user plane; or the uplink and the downlink may be carried on only a same carrier turns into a case in which the control plane is on the PCC, and the user plane is on the SCC; or the uplink is on the PCC, and the downlink is on the SCC; or the downlink is on the PCC, and the uplink is on the SCC. Different from an architecture in a conventional technology in which the control plane and the user plane or the uplink and the downlink may be carried on only the same carrier, in embodiments of this application, the control plane and the user plane may be carried on different carriers. For example, the control plane is on the PCC, and the user plane is on the SCC. In this way, originally, when a carrier capability of the SCC is greater than a carrier capability of the PCC, data that exceeds the PCC capability needs to be sent from an RLC layer of the PCC, passes through a transmission channel, and then is sent to a terminal through a MAC layer of the SCC. This introduces an additional path delay. In addition, if there is a limitation due to the transmission channel, the SCC capability cannot be fully used, and resources are wasted. By contrast, when the uplink and the downlink can be separately deployed, carriers having optimal performance for deployment may be respectively selected for the uplink and the downlink. For example, a downlink having a large service volume needs to be deployed on a large-bandwidth SCC. However, an uplink capability of the SCC is weak, an uplink capability of the PCC is strong, and a downlink capability of the PCC is weak. In this case, if a strong coupling between uplink deployment and downlink deployment is still used, performance of either the PCC or the SCC is affected. Therefore, by using a separation architecture provided in embodiments of this application, the carriers having the optimal performance may be respectively selected for deployment of the uplink and the downlink. In conclusion, according to the communication method provided in embodiments of this application, the user plane and the control plane, or the uplink and the downlink may be deployed on different carriers, so that resources and advantages of the different carriers can be fully used, usage of the resources can be maximized, and a service rate can be increased.

In a possible implementation, the first-type data includes the control plane data, and the second-type data includes the user plane data; and the performing transmission of first-type data via a primary carrier cell PCC includes: generating a first message through a packet data convergence protocol PDCP layer of the PCC, and sending the first message to a radio link control RLC layer of the PCC; and receiving the first message through the RLC layer of the PCC, generating a second message by using the first message, and sending the second message to a media access control MAC layer of the PCC.

In embodiments of this application, resource utilization is improved in a separation architecture in which the control plane data is deployed on the PCC and the user plane data is deployed on the SCC. The first message is generated through the PDCP layer of the PCC, and the first message is sent to the RLC layer of the PCC. The first message is received through the RLC layer of the PCC, the second message is generated by using the first message, and the second message is sent to the MAC layer of the PCC. A third message is generated through a PDCP layer of the SCC, and the third message is sent to an RLC layer of the SCC. The third message is received through the RLC layer of the SCC, a fourth message is generated by using the third message, and the fourth message is sent to the MAC layer of the SCC. Alternatively, the third message is received through the RLC layer of the SCC, a fourth message is generated by using the third message, one part of the fourth message is sent to the MAC layer of the SCC, and the other part of the fourth message is sent to the MAC layer of the PCC. In this separation architecture, the user plane data may be directly sent from a core network to the SCC, and may be directly sent through an air interface of the SCC. This avoids a path detour and reduces a data transmission delay. In addition, even if the data that exceeds the SCC capability needs to be sent to the PCC, the PCC capability is small and required transmission bandwidth is also small. This reduces transmission limitation scenarios.

In a possible implementation, the performing transmission of second-type data via a secondary carrier cell SCC includes: generating a third message through a PDCP layer of the SCC, and sending the third message to an RLC layer of the SCC; and receiving the third message through the RLC layer of the SCC, generating a fourth message by using the third message, and sending the fourth message to a MAC layer of the SCC; or receiving the third message through the RLC layer of the SCC, generating a fourth message by using the third message, sending one part of the fourth message to a MAC layer of the SCC, and sending the other part of the fourth message to the MAC layer of the PCC. In embodiments of this application, when the user plane data exceeds the carrier capability of the SCC, an excess data part of the SCC needs to be offloaded to the PCC. First, the third message generated through the PDCP layer of the SCC is sent to the RLC layer of the SCC, the fourth message is received through the RLC layer of the SCC, and the fourth message is generated by using the third message. A part, of the fourth message, that may be carried by the SCC is sent to the MAC layer of the SCC, and a part, of the fourth message, that exceeds the carrier capability of the SCC is sent to the MAC layer of the PCC. Herein, the carrier capability of the PCC is small, and the required transmission bandwidth is also small. Therefore, even if data that can be transmitted on an offloading channel is small, the offloading transmission is not limited because the PCC needs little data.

In a possible implementation, the first-type data includes the uplink data, and the second-type data includes the downlink data; and the performing transmission of first-type data via a primary carrier cell PCC includes: generating a first message through a MAC layer of the PCC, or generating one part of a first message through a MAC layer of the PCC, and generating the other part of the first message through a MAC layer of the SCC, and sending the first message to an RLC layer of the PCC; and receiving the first message through the RLC layer of the PCC, generating a second message by using the first message, and sending the second message to a PDCP layer of the PCC. In embodiments of this application, uplink and downlink peak rates are improved in a separation architecture in which the uplink data is deployed on the PCC and the downlink data is deployed on the SCC. The first message is generated through the MAC layer of the PCC, or the part of the first message is generated through the MAC layer of the PCC, and the other part of the first message is generated through the MAC layer of the SCC, and the first message is sent to the RLC layer of the PCC. The first message is received through the RLC layer of the PCC, the second message is generated by using the first message, and the second message is sent to the PDCP layer of the PCC. In this separation architecture, the downlink data may be directly sent from a core network to the SCC, and may be directly sent through an air interface of the SCC. This avoids a path detour and reduces a data transmission delay. In addition, even if the data that exceeds the SCC capability needs to be sent to the PCC, the PCC capability is small and required transmission bandwidth is also small. This reduces transmission limitation scenarios.

In a possible implementation, the performing transmission of second-type data via a secondary carrier cell SCC includes: generating a third message through a PDCP layer of the SCC, and sending the third message to an RLC layer of the SCC; and receiving the third message through the RLC layer of the SCC, generating a fourth message by using the third message, and sending the fourth message to the MAC layer of the SCC; or receiving the third message through the RLC layer of the SCC, generating a fourth message by using the third message, sending one part of the fourth message to the MAC layer of the SCC, and sending the other part of the fourth message to the MAC layer of the PCC. In embodiments of this application, when the downlink data exceeds the carrier capability of the SCC, an excess data part of the SCC needs to be offloaded to the PCC. First, the third message generated through the PDCP layer of the SCC is sent to the RLC layer of the SCC, the fourth message is received through the RLC layer of the SCC, and the fourth message is generated by using the third message. A part, of the fourth message, that may be carried by the SCC is sent to the MAC layer of the SCC, and a part, of the fourth message, that exceeds the carrier capability of the SCC is sent to the MAC layer of the PCC. Herein, the carrier capability of the PCC is small, and the required transmission bandwidth is also small. Therefore, even if data that can be transmitted on an offloading channel is small, the offloading transmission is not limited because the PCC needs little data.

In a possible implementation, the first-type data includes the downlink data, and the second-type data includes the uplink data; and the performing transmission of first-type data via a primary carrier cell PCC includes: generating a first message through a PDCP layer of the PCC, and sending the first message to an RLC layer of the PCC; and receiving the first message through the RLC layer of the PCC, generating a second message by using the first message, and sending the second message to a MAC layer of the PCC; or receiving the first message through the RLC layer of the PCC, generating a second message by using the first message, sending one part of the second message to a MAC layer of the PCC, and sending the other part of the second message to a MAC layer of the SCC.

In embodiments of this application, uplink and downlink peak rates are improved in a separation architecture in which the downlink data is deployed on the PCC and the uplink data is deployed on the SCC. The first message is generated through the PDCP layer of the PCC, and the first message is sent to the RLC layer of the PCC. The first message is received through the RLC layer of the PCC, the second message is generated by using the first message, and the second message is sent to the MAC layer of the PCC. Alternatively, the first message is received through the RLC layer of the PCC, the second message is generated by using the first message, the part of the second message is sent to the MAC layer of the PCC, and the other part of the second message is sent to the MAC layer of the SCC. In this separation architecture, the uplink data may be directly sent from a terminal device to the SCC. This avoids a path detour and reduces a data transmission delay. In addition, even if the data that exceeds the SCC capability needs to be sent to the PCC, the PCC capability is small and required transmission bandwidth is also small. This reduces transmission limitation scenarios.

In a possible implementation, the performing transmission of second-type data via a secondary carrier cell SCC includes: generating a third message through the MAC layer of the SCC, or generating one part of a third message through the MAC layer of the SCC, and generating the other part of the third message through the MAC layer of the PCC, and sending the third message to an RLC layer of the SCC; and receiving the third message through the RLC layer of the SCC, generating a fourth message by using the third message, and sending the fourth message to a PDCP layer of the SCC. In embodiments of this application, when the uplink data exceeds the carrier capability of the SCC, an excess data part of the SCC needs to be offloaded to the PCC. The third message is generated through the MAC layer of the SCC, or the part of the third message is generated through the MAC layer of the SCC, and the other part of the third message is generated through the MAC layer of the PCC, and the third message is sent to the RLC layer of the SCC. The third message is received through the RLC layer of the SCC, the fourth message is generated by using the third message, and the fourth message is sent to the PDCP layer of the SCC. Herein, the carrier capability of the PCC is small, and the required transmission bandwidth is also small. Therefore, even if data that can be transmitted on an offloading channel is small, the offloading transmission is not limited because the PCC needs little data.

According to a second aspect, an embodiment of this application provides a communication method, applied to a network device, where the method includes: performing transmission of third-type data via a main carrier group MCG, and performing transmission of fourth-type data via a secondary carrier group SCG, where the third-type data includes uplink data, and the fourth-type data includes downlink data; or the third-type data includes downlink data, and the fourth-type data includes uplink data.

Embodiments of this application are applied to a dual connectivity DC scenario. When an architecture in which an uplink and a downlink are separated is used, an original case in which the uplink and the downlink may be carried on only a same carrier turns into a case in which the uplink is on the MCG, and the downlink is on the SCG; or the downlink is on the SCG, and the uplink is on the MCG. Different from an architecture in a conventional technology in which the uplink and the downlink may be carried on only the same carrier, in embodiments of this application, the uplink and the downlink may be separately deployed, so that carriers having optimal performance may be respectively selected for deployment of the uplink and the downlink. For example, a downlink having a large service volume needs to be deployed on a large-bandwidth SCG. However, an uplink capability of the SCG is weak, an uplink capability of the MCG is strong, and a downlink capability of the MCG is weak. In this case, if a strong coupling between uplink deployment and downlink deployment is still used, performance of either the SCG or the MCG is affected. Therefore, a separation architecture provided in embodiments of this application is required, and the carriers having the optimal performance may be respectively selected for deployment of the uplink and the downlink. In conclusion, to provide a higher service rate, according to the communication method provided in embodiments of this application, the uplink and the downlink may be deployed on different carriers, so that resources and advantages of the different carriers can be fully used, and usage of the resources can be maximized.

In a possible implementation, the third-type data includes the uplink data, and the fourth-type data includes the downlink data; and the performing transmission of third-type data via a main carrier group MCG includes: generating a fifth message through a MAC layer of the MCG, and sending the fifth message to an RLC layer of the MCG; and receiving the fifth message through the RLC layer of the MCG, generating a sixth message by using the fifth message, and sending the sixth message to a PDCP layer of the MCG; or generating one part of a fifth message through a MAC layer of the MCG, generating the other part of the fifth message through a MAC layer of the SCG, sending the part of the fifth message to an RLC layer of the MCG, and sending the other part of the fifth message to an RLC layer of the SCG; receiving the part of the fifth message through the RLC layer of the MCG, generating a sixth message by using the part of the fifth message, and sending the sixth message to a PDCP layer of the MCG; and receiving the other part of the fifth message through the RLC layer of the SCG, generating the sixth message by using the other part of the fifth message, and sending the sixth message to the PDCP layer of the MCG.

In embodiments of this application, the uplink data is deployed on the MCG. The fifth message is generated through the MAC layer of the MCG, and the fifth message is sent to the RLC layer of the MCG. The fifth message is received through the RLC layer of the MCG, the sixth message is generated by using the fifth message, and the sixth message is sent to the PDCP layer of the MCG. Alternatively, the part of the fifth message is generated through the MAC layer of the MCG, the other part of the fifth message is generated through the MAC layer of the SCG, the part of the fifth message is sent to the RLC layer of the MCG, and the other part of the fifth message is sent to the RLC layer of the SCG. The part of the fifth message is received through the RLC layer of the MCG, the sixth message is generated by using the part of fifth message, and the sixth message is sent to the PDCP layer of the MCG. The other part of the fifth message is received through the RLC layer of the SCG, the sixth message is generated by using the other part of the fifth message, and the sixth message is sent to the PDCP layer of the MCG. In this separation architecture, the uplink data may be directly sent from a terminal device to the MCG. This avoids a path detour and reduces a data transmission delay.

In a possible implementation, the performing transmission of fourth-type data via a secondary carrier group SCG includes: generating a seventh message through a PDCP layer of the SCG, and sending the seventh message to the RLC layer of the SCG; and receiving the seventh message through the RLC layer of the SCG, generating an eighth message by using the seventh message, and sending the eighth message to the MAC layer of the SCG; or generating a seventh message through a PDCP layer of the SCG, sending one part of the seventh message to the RLC layer of the SCG, and sending the other part of the seventh message to the RLC layer of the MCG; receiving the part of the seventh message through the RLC layer of the SCG, generating an eighth message by using the part of the seventh message, and sending the eighth message to the MAC layer of the SCG; and receiving the other part of the seventh message through the RLC layer of the MCG, generating a ninth message by using the other part of the seventh message, and sending the ninth message to the MAC layer of the MCG. In embodiments of this application, when the downlink data exceeds a carrier capability of the SCG, an excess data part of the SCG needs to be offloaded to the MCG. First, the seventh message is generated through the PDCP layer of the SCG, the part of the seventh message is sent to the RLC layer of the SCG, and the other part of the seventh message is sent to the RLC layer of the MCG. The part of the seventh message is received through the RLC layer of the SCG, the eighth message is generated by using the part of the seventh message, and the eighth message is sent to the MAC layer of the SCG. The other part of the seventh message is received through the RLC layer of the MCG, the ninth message is generated by using the other part of the seventh message, and the ninth message is sent to the MAC layer of the MCG. Herein, a carrier capability of the MCG is small, and a required transmission bandwidth is also small. Therefore, even if data that can be transmitted on an offloading channel is small, the offloading transmission is not limited because the MCG needs little data.

In a possible implementation, the third-type data includes the downlink data, and the fourth-type data includes the uplink data; and the performing transmission of third-type data via a main carrier group MCG includes: generating a fifth message through a PDCP layer of the MCG, and sending the fifth message to an RLC layer of the MCG; and receiving the fifth message through the RLC layer of the MCG, generating a sixth message by using the fifth message, and sending the sixth message to a MAC layer of the MCG; or generating a fifth message through a PDCP layer of the MCG, sending one part of the fifth message to an RLC layer of the MCG, and sending the other part of the fifth message to an RLC layer of the SCG; receiving the part of the fifth message through the RLC layer of the MCG, generating a sixth message by using the part of the fifth message, and sending the sixth message to a MAC layer of the MCG; and receiving the other part of the fifth message through the RLC layer of the SCG, generating the sixth message by using the other part of the fifth message, and sending the sixth message to a MAC layer of the SCG.

In embodiments of this application, when an architecture in which an uplink and a downlink are separated is used, an original case in which the uplink and the downlink may be carried on only a same carrier turns into a case in which the uplink is on the MCG, and the downlink is on the SCG; or the downlink is on the SCG, and the uplink is on the MCG. Different from an architecture in a conventional technology in which the uplink and the downlink may be carried on only the same carrier, in embodiments of this application, the uplink and the downlink may be separately deployed, so that the carriers having the optimal performance may be respectively selected for deployment of the uplink and the downlink. For example, a downlink having a large service volume needs to be deployed on a large-bandwidth SCG. However, an uplink capability of the SCG is weak, an uplink capability of the MCG is strong, and a downlink capability of the MCG is weak. In this case, if a strong coupling between uplink deployment and downlink deployment is still used, the performance of either the SCG or the MCG is affected. Therefore, a separation architecture provided in embodiments of this application is required, and the carriers having the optimal performance may be respectively selected for deployment of the uplink and the downlink. In conclusion, to provide a higher service rate, according to the communication method provided in embodiments of this application, the uplink and the downlink may be deployed on different carriers, so that resources and advantages of the different carriers can be fully used, and usage of the resources can be maximized.

In a possible implementation, the third-type data includes the uplink data, and the fourth-type data includes the downlink data; and the performing transmission of third-type data via a main carrier group MCG includes: generating a fifth message through a MAC layer of the MCG, and sending the fifth message to an RLC layer of the MCG; and receiving the fifth message through the RLC layer of the MCG, generating a sixth message by using the fifth message, and sending the sixth message to a PDCP layer of the MCG; or generating one part of a fifth message through a MAC layer of the MCG, generating the other part of the fifth message through a MAC layer of the SCG, sending the part of the fifth message to an RLC layer of the MCG, and sending the other part of the fifth message to an RLC layer of the SCG; receiving the part of the fifth message through the RLC layer of the MCG, generating a sixth message by using the part of the fifth message, and sending the sixth message to a PDCP layer of the MCG; and receiving the other part of the fifth message through the RLC layer of the SCG, generating the sixth message by using the other part of the fifth message, and sending the sixth message to the PDCP layer of the MCG.

In embodiments of this application, the uplink data is deployed on the MCG. The fifth message is generated through the MAC layer of the MCG, and the fifth message is sent to the RLC layer of the MCG. The fifth message is received through the RLC layer of the MCG, the sixth message is generated by using the fifth message, and the sixth message is sent to the PDCP layer of the MCG. Alternatively, the part of the fifth message is generated through the MAC layer of the MCG, the other part of the fifth message is generated through the MAC layer of the SCG, the part of the fifth message is sent to the RLC layer of the MCG, and the other part of the fifth message is sent to the RLC layer of the SCG. The part of the fifth message is received through the RLC layer of the MCG, the sixth message is generated by using the part of the fifth message, and the sixth message is sent to the PDCP layer of the MCG. The other part of the fifth message is received through the RLC layer of the SCG, the sixth message is generated by using the other part of the fifth message, and the sixth message is sent to the PDCP layer of the MCG. In this separation architecture, the uplink data may be directly sent from a terminal device to the MCG. This avoids a path detour and reduces a data transmission delay.

In a possible implementation, the performing transmission of fourth-type data via a secondary carrier group SCG includes: generating a seventh message through the MAC layer of the SCG, and sending the seventh message to the RLC layer of the SCG; and receiving the seventh message through the RLC layer of the SCG, generating an eighth message by using the seventh message, and sending the eighth message to a PDCP layer of the SCG; or generating one part of a seventh message through the MAC layer of the SCG, generating the other part of the seventh message through the MAC layer of the MCG, sending the part of the seventh message to the RLC layer of the SCG, and sending the other part of the seventh message to the RLC layer of the MCG; receiving the part of the seventh message through the RLC layer of the SCG, generating an eighth message by using the part of the seventh message, and sending the eighth message to a PDCP layer of the SCG; and receiving the other part of the seventh message through the RLC layer of the MCG, generating the eighth message by using the other part of the seventh message, and sending the eighth message to the PDCP layer of the SCG. In embodiments of this application, when the uplink data exceeds a carrier capability of the SCG, an excess data part of the SCG needs to be offloaded to the MCG. First, the part of the seventh message is generated through the MAC layer of the SCG, the other part of the seventh message is generated through the MAC layer of the MCG, the part of the seventh message is sent to RLC layer of the SCG, the other part of the seventh message is sent to the RLC layer of the MCG. The part of the seventh message is received through the RLC layer of the SCG, the eighth message is generated by using the part of the seventh message, and the eighth message is sent to the PDCP layer of the SCG. The other part of the seventh message is received through the RLC layer of the MCG, the eighth message is generated by using the other part of the seventh message, and the eighth message is sent to the PDCP layer of the SCG. Herein, a carrier capability of the MCG is small, and a required transmission bandwidth is also small. Therefore, even if data that can be transmitted on an offloading channel is small, the offloading transmission is not limited because the MCG needs little data.

According to a third aspect, an embodiment of this application provides a communication apparatus, including: a first transmission unit, configured to: perform transmission of first-type data via a primary carrier cell PCC, and perform transmission of second-type data via a secondary carrier cell SCC, where the first-type data includes control plane data, and the second-type data includes user plane data; or the first-type data includes uplink data, and the second-type data includes downlink data; or the first-type data includes downlink data, and the second-type data includes uplink data.

In a possible implementation, the first transmission unit is specifically configured to:
generate a first message through a packet data convergence protocol PDCP layer of the PCC, and send the first message to a radio link control RLC layer of the PCC; and
receive the first message through the RLC layer of the PCC, generate a second message by using the first message, and send the second message to a media access control MAC layer of the PCC.

In a possible implementation, the first transmission unit is specifically configured to:
generate a third message through a PDCP layer of the SCC, and send the third message to an RLC layer of the SCC; and
receive the third message through the RLC layer of the SCC, generate a fourth message by using the third message, and send the fourth message to a MAC layer of the SCC; or receive the third message through the RLC layer of the SCC, generate a fourth message by using the third message, send one part of the fourth message to a MAC layer of the SCC, and send the other part of the fourth message to the MAC layer of the PCC.

In a possible implementation, the first transmission unit is specifically configured to:
generate a first message through a MAC layer of the PCC, or generate one part of a first message through a MAC layer of the PCC, and generate the other part of the first message through a MAC layer of the SCC, and send the first message to an RLC layer of the PCC; and
receive the first message through the RLC layer of the PCC, generate a second message by using the first message, and send the second message to a PDCP layer of the PCC.

In a possible implementation, the first transmission unit is specifically configured to:
generate a third message through a PDCP layer of the SCC, and send the third message to an RLC layer of the SCC; and
receive the third message through the RLC layer of the SCC, generate a fourth message by using the third message, and send the fourth message to the MAC layer of the SCC; or receive the third message through the RLC layer of the SCC, generate a fourth message by using the third message, send one part of the fourth message to the MAC layer of the SCC, and send the other part of the fourth message to the MAC layer of the PCC.

In a possible implementation, the first transmission unit is specifically configured to:
generate a first message through a PDCP layer of the PCC, and send the first message to an RLC layer of the PCC; and
receive the first message through the RLC layer of the PCC, generate a second message by using the first message, and send the second message to a MAC layer of the PCC; or
receive a first message through an RLC layer of the PCC, generate a second message by using the first message, send one part of the second message to a MAC layer of the PCC, and send the other part of the second message to a MAC layer of the SCC.

In a possible implementation, the first transmission unit is specifically configured to:
generate a third message through the MAC layer of the SCC, or generate one part of a third message through the MAC layer of the SCC, and generate the other part of the third message through the MAC layer of the PCC, and send the third message to an RLC layer of the SCC; and
receive the third message through the RLC layer of the SCC, generate a fourth message by using the third message, and send the fourth message to a PDCP layer of the SCC.

According to a fourth aspect, an embodiment of this application provides a communication apparatus, including:
a second transmission unit, configured to: perform transmission of third-type data via a main carrier group MCG, and perform transmission of fourth-type data via a secondary carrier group SCG, where
the third-type data includes uplink data, and the fourth-type data includes downlink data; or the third-type data includes downlink data, and the fourth-type data includes uplink data.

In a possible implementation, the second transmission unit is specifically configured to:
generate a fifth message through a MAC layer of the MCG, and send the fifth message to an RLC layer of the MCG; and
receive the fifth message through the RLC layer of the MCG, generate a sixth message by using the fifth message, and send the sixth message to a PDCP layer of the MCG; or
generate one part of a fifth message through a MAC layer of the MCG, generate the other part of the fifth message through a MAC layer of the SCG, send the part of the fifth message to an RLC layer of the MCG, and send the other part of the fifth message to an RLC layer of the SCG;
receive the part of the fifth message through the RLC layer of the MCG, generate a sixth message by using the part of the fifth message, and send the sixth message to a PDCP layer of the MCG; and
receive the other part of the fifth message through the RLC layer of the SCG, generate the sixth message by using the other part of the fifth message, and send the sixth message to the PDCP layer of the MCG.

In a possible implementation, the second transmission unit is specifically configured to:
generate a seventh message through a PDCP layer of the SCG, and send the seventh message to the RLC layer of the SCG; and
receive the seventh message through the RLC layer of the SCG, generate an eighth message by using the seventh message, and send the eighth message to the MAC layer of the SCG.

In a possible implementation, the second transmission unit is specifically configured to:
generate a seventh message through a PDCP layer of the SCG, send one part of the seventh message to the RLC layer of the SCG, and send the other part of the seventh message to the RLC layer of the MCG;
receive the part of the seventh message through the RLC layer of the SCG, generate an eighth message by using the part of the seventh message, and send the eighth message to the MAC layer of the SCG; and
receive the other part of the seventh message through the RLC layer of the MCG, generate a ninth message by using the other part of the seventh message, and send the ninth message to the MAC layer of the MCG.

In a possible implementation, the second transmission unit is specifically configured to:
generate a fifth message through a PDCP layer of the MCG, and send the fifth message to an RLC layer of the MCG; and
receive the fifth message through the RLC layer of the MCG, generate a sixth message by using the fifth message, and send the sixth message to a MAC layer of the MCG; or
generate a fifth message through a PDCP layer of the MCG, send one part of the fifth message to an RLC layer of the MCG, and send the other part of the fifth message to an RLC layer of the SCG;
receive the part of the fifth message through the RLC layer of the MCG, generate a sixth message by using the part of the fifth message, and send the sixth message to a MAC layer of the MCG; and
receive the other part of the fifth message through the RLC layer of the SCG, generate the sixth message by using the other part of the fifth message, and send the sixth message to a MAC layer of the SCG.

In a possible implementation, the second transmission unit is specifically configured to:
generate a seventh message through the MAC layer of the SCG, and send the seventh message to the RLC layer of the SCG; and
receive the seventh message through the RLC layer of the SCG, generate an eighth message by using the seventh message, and send the eighth message to a PDCP layer of the SCG.

In a possible implementation, the second transmission unit is specifically configured to:
generate one part of a seventh message through the MAC layer of the SCG, generate the other part of the seventh message through the MAC layer of the MCG, send the part of the seventh message to the RLC layer of the SCG, and send the other part of the seventh message to the RLC layer of the MCG;
receive the part of the seventh message through the RLC layer of the SCG, generate an eighth message by using the part of the seventh message, and send the eighth message to a PDCP layer of the SCG; and
receive the other part of the seventh message through the RLC layer of the MCG, generate the eighth message by using the other part of the seventh message, and send the eighth message to the PDCP layer of the SCG.

According to a fifth aspect, an embodiment of this application further provides a computer program. The computer program includes instructions. When the instructions are executed by a processor, the method according to either the first aspect or the second aspect is implemented.

According to a sixth aspect, an embodiment of this application further provides a computer-readable storage medium, where the computer-readable storage medium stores program code executed by a device. When the program code is executed by the device, the program code is used to implement the method according to either the first aspect or the second aspect.

### BRIEF DESCRIPTION OF DRAWINGS

To describe the technical models in embodiments of this application or in the background more clearly, the following describes the accompanying drawings for describing embodiments of this application or the background.
FIG. 1 is a schematic diagram of an architecture of a carrier aggregation system according to an embodiment of this application;
FIG. 2 is a schematic diagram of an architecture of a dual connectivity system according to an embodiment of this application;
FIG. 3 is a diagram of an architecture of a communication method according to an embodiment of this application;
FIG. 3a is a schematic flowchart of a communication method according to an embodiment of this application;
FIG. 4 is a schematic flowchart of separating a user plane from a control plane according to an embodiment of this application;
FIG. 5a is a diagram of an architecture in which a user plane and a control plane are both deployed on a PCC according to an embodiment of this application;
FIG. 5b is a diagram of an architecture in which a control plane is deployed on a PCC and a user plane is deployed on an SCC according to an embodiment of this application;
FIG. 6 is a diagram of an architecture in which an uplink is deployed on a PCC and a downlink is deployed on an SCC according to an embodiment of this application;
FIG. 7 is a diagram of an architecture in which a downlink is deployed on a PCC and an uplink is deployed on an SCC according to an embodiment of this application;
FIG. 8a is a diagram of an architecture in which a downlink and an uplink are both carried on a PCC/an MCG according to an embodiment of this application;
FIG. 8b is a diagram of an architecture in which a downlink and an uplink are both carried on an SCC/SCG according to an embodiment of this application;
FIG. 8c is a diagram of an architecture in which an uplink is carried on a PCC/an MCG, and a downlink is carried on an SCC/SCG according to an embodiment of this application;
FIG. 8d is a diagram of an architecture in which a downlink is carried on a PCC/an MCG and an uplink is carried on an SCC/SCG according to an embodiment of this application;
FIG. 9 is a diagram of an architecture of another communication method according to an embodiment of this application;
FIG. 9a is a diagram of an architecture in which an uplink is deployed on an MCG and a downlink is deployed on an SCG according to an embodiment of this application;
FIG. 9b is a diagram of an architecture in which a downlink is deployed on an MCG and an uplink is deployed on an SCG according to an embodiment of this application;
FIG. 9c is a schematic flowchart of still another communication method according to an embodiment of this application;
FIG. 10 is a schematic diagram of a structure of a communication apparatus according to an embodiment of this application; and
FIG. 11 is a schematic diagram of a structure of another communication apparatus according to an embodiment of this application.

### DESCRIPTION OF EMBODIMENTS

The following describes embodiments of this application with reference to the accompanying drawings in embodiments of this application.

The terms "first", "second", "third", "fourth", and the like in the specification, claims, and accompanying drawings of this application are intended to distinguish between different objects but do not indicate a particular order. In addition, the terms "including" and "having" and any other variants thereof are intended to cover non-exclusive inclusions. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various positions in this specification may neither necessarily mean a same embodiment, nor mean an independent or optional embodiment exclusive from another embodiment. Persons skilled in the art explicitly and implicitly understand that embodiments described in this specification may be combined with other embodiments.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

First, a technical problem to be specifically resolved in this application is analyzed and proposed. With the development of science and technology and the progress of society, to provide a higher service rate, the 3GPP introduces a CA function, aggregates a plurality of contiguous or non-contiguous component carriers to provide larger bandwidth, and provides a DC function. Resources and advantages of different carriers and different RATs are fully used to improve user experience on uplink and downlink peak rates. However, in an existing network architecture, in a CA scenario, both a control plane and a user plane are carried on a primary carrier cell PCC, and then user plane data is offloaded, through an RLC layer of the PCC, to a secondary carrier cell SCC for sending. Similarly, in the CA scenario, an uplink and a downlink are both carried on a same carrier cell (the PCC or the SCC). In a DC scenario, an uplink and a downlink are both carried on a same carrier group (a main carrier group MCG or a secondary carrier group SCG).

In such a multi-carrier (CA or DC) scenario, the control plane and user plane, or the uplink and downlink are strongly coupled (carried on a same carrier). As a result, when a carrier capability difference is large, for example, when a carrier capability of the SCC is far greater than a carrier capability of the PCC, the SCC may carry most of traffic. Therefore, traffic carried on a user plane of the PCC needs to be offloaded to the SCC through the RLC layer of the PCC. An offloading process increases an additional path and causes a path delay, and the path may limit the traffic offloaded to the SCC. In this case, resource usage maximization based on a service requirement cannot be performed.

In conclusion, an existing communication method cannot meet a requirement of users for the uplink and downlink peak rates, and causes a large amount of resource waste. Therefore, the communication method provided in this application is used to resolve the foregoing technical problem.

For ease of understanding embodiments of this application, the following describes scenarios to which the communication method in this application is applied as examples, and the scenarios may include two scenarios below.

### Scenario 1: An application scenario is a carrier aggregation CA scenario.

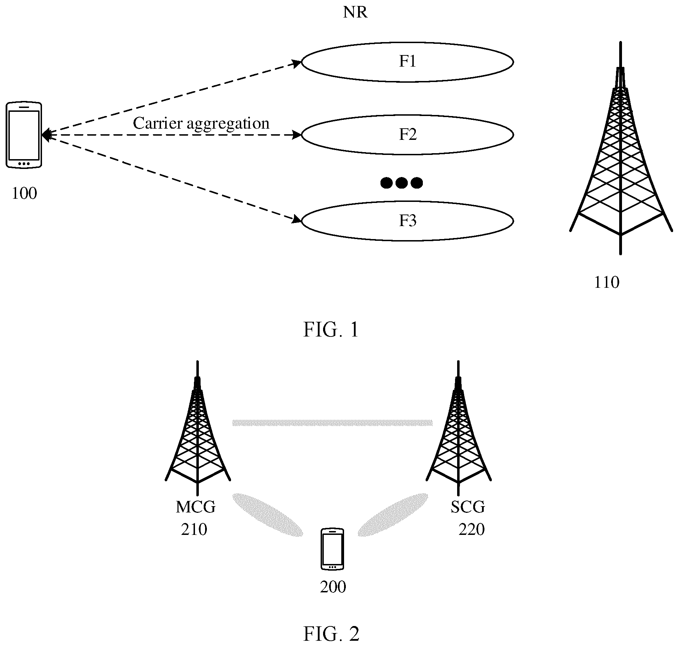

Carrier aggregation CAis introduced by the 3GPP in a phase of Release 10. A plurality of contiguous or non-contiguous carriers (Component Carriers, CCs for short) are aggregated into larger bandwidth to meet a requirement of the 3GPP. For details, refer to FIG. 1. FIG. 1 is a schematic diagram of an architecture of a carrier aggregation system according to an embodiment of this application. As shown in FIG. 1, the system architecture may include a terminal device 100, a network device 110, a plurality of different carriers F1, F2, F3, and the like, and NR. The new radio NR (New Radio) is a channel for establishing a wireless connection between the terminal device and the network device. F1, F2, F3, and the like represent different carriers. A process in which the terminal device 100 and the network device 110 aggregate the plurality of contiguous or non-contiguous carriers (F1, F2, F3, and the like) in the NR into the larger bandwidth for data transmission is referred to as a process of carrier aggregation.

### Scenario 2: An application scenario is a dual connectivity DC scenario.

The dual connectivity scenario indicates that one terminal device is connected to two network devices. FIG. 2 is a schematic diagram of an architecture of a dual connectivity system according to an embodiment of this application. As shown in FIG. 2, the system architecture may include a terminal device 200, a network device 210, and a network device 220. The terminal device 200 separately establishes a connection to the network device 210 and the network device 220.

It may be understood that the foregoing two application scenarios are merely several example implementations in embodiments of this application, and the application scenarios in embodiments of this application include but are not limited to the foregoing application scenarios.

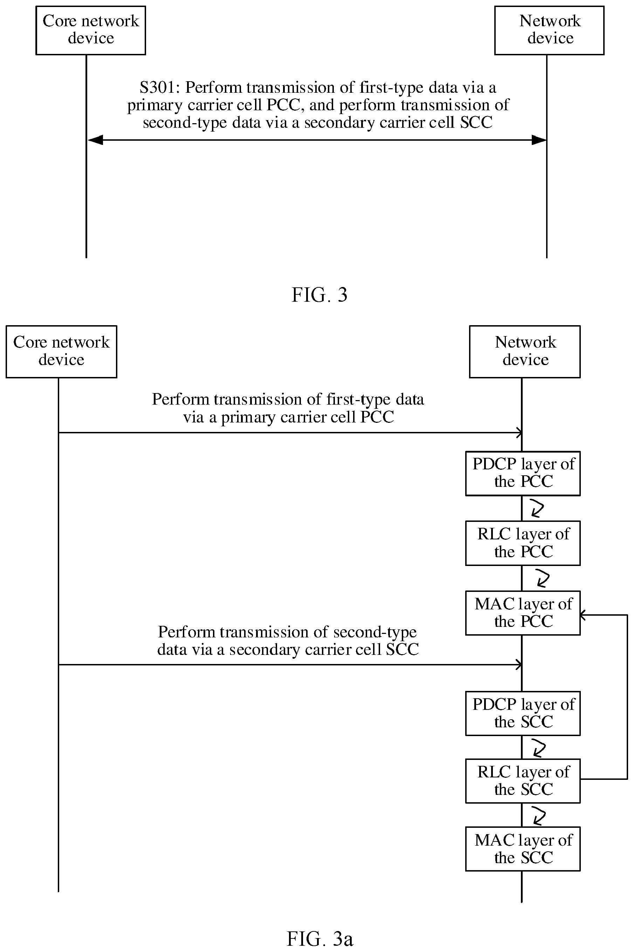

Based on the foregoing technical problem and the corresponding application scenario in this application, for ease of understanding of embodiments of this application, the following first describes one of network architectures, where embodiments of this application are based on the network architectures. FIG. 3 is a diagram of an architecture of a communication method according to an embodiment of this application. The technical method in embodiments of this application may be specifically implemented in the example system architecture shown in FIG. 3 or a similar system architecture. As shown in FIG. 3, the system architecture may include a core network device and a network device. As shown in FIG. 3, the method may be applied to the system architecture shown in FIG. 1, and the architecture in FIG. 1 may be used to support and perform step S301 in the method procedure shown in FIG. 3. The following provides descriptions from a network device side with reference to FIG. 3. The method may include the following step S301.

Step S301: Perform transmission of first-type data via a primary carrier cell PCC, and perform transmission of second-type data via a secondary carrier cell SCC.

Specifically, the first-type data includes control plane data, and the second-type data includes user plane data; or the first-type data includes uplink data, and the second-type data includes downlink data; or the first-type data includes downlink data, and the second-type data includes uplink data.

For example, a specific process in which the first-type data includes the control plane data and the second-type data includes the user plane data may include the following steps.

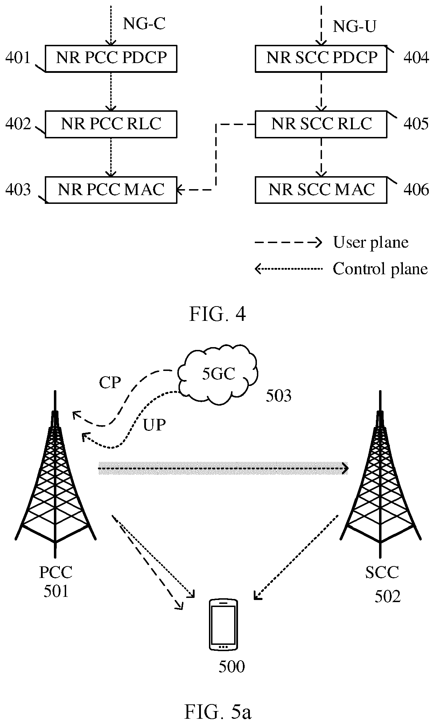

FIG. 4 is a schematic flowchart of separating a user plane from a control plane according to an embodiment of this application. First, data transmitted from the control plane of a core network is received through a PDCP layer 401 of a PCC. Next, a first message is generated through the PDCP layer of the PCC. Then, the generated first message is sent to an RLC layer 402 of the PCC. After the first message is received through the RLC layer of the PCC, a second message is generated by using the first message, and the second message is sent to a MAC layer 403 of the PCC. Finally, a third message is sent to a terminal device through the MAC layer. In addition, a third message is generated through a PDCP layer 404 of the SCC, and the third message is sent to an RLC layer 405 of the SCC. The third message is received through the RLC layer of the SCC, a fourth message is generated by using the third message, and the fourth message is sent to a MAC layer 406 of the SCC. Alternatively, the third message is received through the RLC layer of the SCC, a fourth message is generated by using the third message, one part of the fourth message is sent to a MAC layer 406 of the SCC, and the other part of the fourth message is sent to the MAC layer 403 of the PCC. Optionally, the foregoing steps may also be applied to FIG. 3a. FIG. 3a is a schematic flowchart of a communication method according to an embodiment of this application. The foregoing procedure is also applicable to the system architecture.

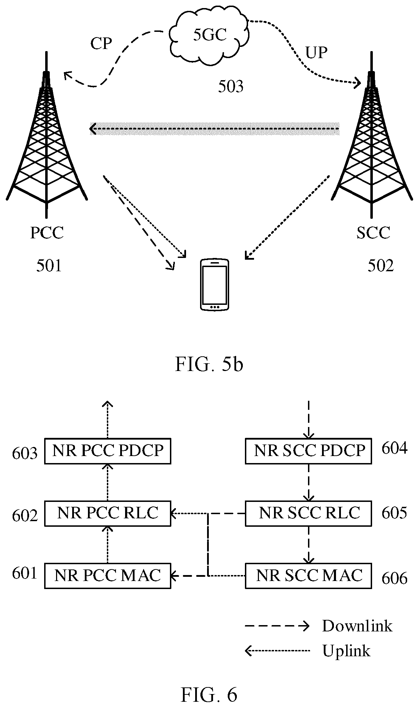

For technical effects generated when the foregoing transmission path is used, refer to FIG. 5a and FIG. 5b. FIG. 5a is a diagram of an architecture in which a user plane and a control plane are both deployed on a PCC according to an embodiment of this application. FIG. 5a shows an existing architecture. Both the control plane CP and the user plane UP from a core network 503 are deployed on a PCC 501. In this way, the user plane can offload data to an SCC 502 only through an RLC layer of the PCC, and send the data to a terminal device 500. As a result, when the SCC can carry most of traffic, the data still needs to be offloaded through the PCC. This causes a path delay. In addition, the data is easily limited by a transmission channel. This causes a loss of CA gains. By contrast, when the architecture provided in embodiments of this application is used, deployment shown in FIG. 5b may be obtained. FIG. 5b is a diagram of an architecture in which a control plane is deployed on a PCC and a user plane is deployed on an SCC according to an embodiment of this application. In FIG. 5b, the control plane CP from a core network 503 is deployed on a PCC 501, and the user plane UP is deployed on an SCC 502.

However, in the conventional CA architecture shown in FIG. 5a, a control plane bearer and a user plane bearer can be deployed on only the PCC, and data is offloaded through the PCC RLC to an SCC MAC. If a carrier capability of the SCC is greater than a carrier capability of the PCC, data that exceeds the PCC capability needs to be sent through the PCC RLC, sent through a transmission channel, and then sent to a terminal through the SCC MAC. This introduces an additional path delay. In addition, if there is a limitation due to the transmission channel, the SCC capability cannot be fully used. This affects user experience. After the separation architecture shown in FIG. 5b in this application is used, the user plane may be carried on the SCC, and the data is directly sent from the core network to the SCC, and is directly sent through an air interface of the SCC. This avoids a path detour and reduces a data transmission delay. In addition, even if data that exceeds the SCC capability needs to be sent to the PCC, the PCC capability is small and required transmission bandwidth is also small. This reduces transmission limitation scenarios.

A specific process in which the first-type data includes the uplink data and the second-type data includes the downlink data may include the following steps.

FIG. 6 is a diagram of an architecture in which an uplink is deployed on a PCC and a downlink is deployed on an SCC according to an embodiment of this application. First, a first message is generated through a MAC layer 601 of the PCC, or one part of the first message is generated through the MAC layer 601 of the PCC, and the other part of the first message is generated through a MAC layer 606 of the SCC, and the first message is sent to an RLC layer 602 of the PCC. The first message is received through the RLC layer of the PCC, a second message is generated by using the first message, and the second message is sent to a PDCP layer 603 of the PCC. Optionally, first, a third message is generated through a PDCP layer 604 of the SCC, and the third message is sent to an RLC layer 605 of the SCC. The third message is received through the RLC layer of the SCC, a fourth message is generated by using the third message, and the fourth message is sent to the MAC layer 606 of the SCC. Alternatively, the third message is received through the RLC layer 605 of the SCC, a fourth message is generated by using the third message, one part of the fourth message is sent to the MAC layer 601 of the SCC, and the other part of the fourth message is sent to the MAC layer 606 of the PCC.

A specific process in which the first-type data includes the downlink data and the second-type data includes the uplink data may include the following steps.

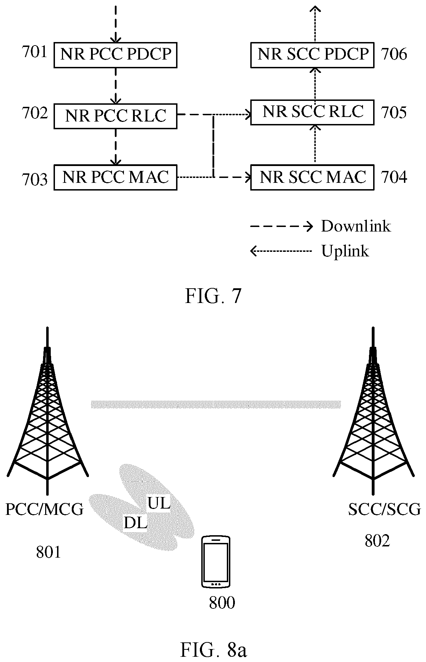

FIG. 7 is a diagram of an architecture in which a downlink is deployed on a PCC and an uplink is deployed on an SCC according to an embodiment of this application. First, a first message is generated through a PDCP layer 701 of the PCC, and the first message is sent to an RLC layer 702 of the PCC. The first message is received through the RLC layer of the PCC, a second message is generated by using the first message, and the second message is sent to a MAC layer 703 of the PCC. Alternatively, the first message is received through the RLC layer 702 of the PCC, a second message is generated by using the first message, one part of the second message is sent to a MAC layer 703 of the PCC, and the other part of the second message is sent to a MAC layer 704 of the SCC. Optionally, a third message is generated through the MAC layer 704 of the SCC, or one part of the third message is generated through the MAC layer of the SCC, and the other part of the third message is generated through the MAC layer 703 of the PCC, and the third message is sent to an RLC layer 705 of the SCC. The third message is received through the RLC layer of the SCC, a fourth message is generated by using the third message, and the fourth message is sent to a PDCP layer 706 of the SCC.

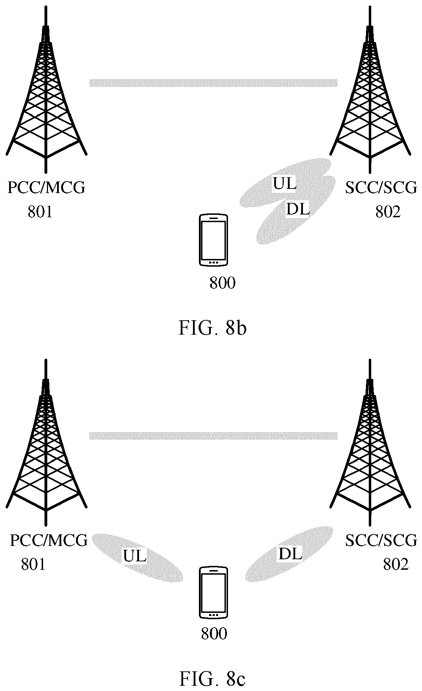

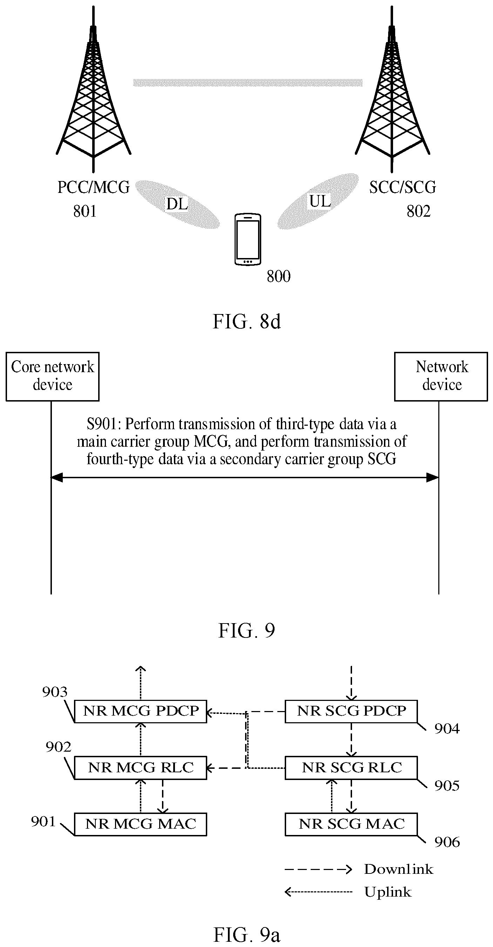

For technical effects generated when the foregoing transmission path is used, refer to FIG. 8a to FIG. 8d. FIG. 8a is a diagram of an architecture in which a downlink and an uplink are both carried on a PCC/an MCG according to an embodiment of this application. FIG. 8a shows an existing architecture. An uplink task and a downlink task of a terminal device 800 are both deployed on a PCC/an MCG 801. FIG. 8b is a diagram of an architecture in which a downlink and an uplink are both carried on an SCC/SCG according to an embodiment of this application. FIG. 8b shows an existing architecture. An uplink task and a downlink task of a terminal device 800 are both deployed on an SCC/SCG 802. FIG. 8c is a diagram of an architecture in which an uplink is carried on a PCC/an MCG, and a downlink is carried on an SCC/SCG according to an embodiment of this application. FIG. 8c shows an architecture according to an embodiment of this application. The uplink of a terminal device 800 is deployed on a PCC/an MCG 801, and the downlink is deployed on an SCC/SCG 802. FIG. 8d is a diagram of an architecture in which a downlink is carried on a PCC/an MCG and an uplink is carried on an SCC/SCG according to an embodiment of this application. FIG. 8d shows an architecture according to an embodiment of this application. The downlink of a terminal device 800 is deployed on a PCC/an MCG 801, and the uplink is deployed on an SCC/SCG 802.

As shown in the preceding figures, in a conventional CA/DC architecture, the uplink and the downlink can be deployed only on one carrier. When an uplink capability and a downlink capability of the carrier are different, and an uplink service requirement and a downlink service requirement are inconsistent, a conflict between uplink deployment and downlink deployment occurs, and optimal performance cannot be obtained simultaneously. For example, in an FDD and TDD combination scenario, a downlink having a large service volume needs to be deployed on a large-bandwidth TDD. However, an uplink capability of the TDD is weak, and an uplink service needs to be deployed on the FDD. A strong coupling between uplink deployment and downlink deployment may cause performance of either the TDD or the FDD to be affected. In this application, the uplink and the downlink are separately deployed, and carriers having optimal performance for deployment may be respectively selected for the uplink and the downlink.

In conclusion, the foregoing steps are applied to a carrier aggregation CA scenario. When an architecture in which a user plane and a control plane, or the uplink and the downlink are separated is used, an original case in which the control plane and the user plane; or the uplink and the downlink may be carried on only a same carrier turns into a case in which the control plane is on the PCC, and the user plane is on the SCC; or the uplink is on the PCC, and the downlink is on the SCC; or the downlink is on the PCC, and the uplink is on the SCC. Different from an architecture in a conventional technology in which the control plane and the user plane or the uplink and the downlink may be carried on only the same carrier, in embodiments of this application, the control plane and the user plane may be carried on different carriers. For example, the control plane is on the PCC, and the user plane is on the SCC. In this way, originally, when a carrier capability of the SCC is greater than a carrier capability of the PCC, data that exceeds the PCC capability needs to be sent from an RLC layer of the PCC, passes through a transmission channel, and then is sent to a terminal through a MAC layer of the SCC. This introduces an additional path delay. In addition, if there is a limitation due to the transmission channel, the SCC capability cannot be fully used, and resources are wasted. By contrast, when the uplink and the downlink can be separately deployed, carriers having optimal performance for deployment may be respectively selected for the uplink and the downlink. For example, a downlink having a large service volume needs to be deployed on a large-bandwidth SCC. However, an uplink capability of the SCC is weak, an uplink capability of the PCC is strong, and a downlink capability of the PCC is weak. In this case, if a strong coupling between uplink deployment and downlink deployment is still used, performance of either the PCC or the SCC is affected. Therefore, by using a separation architecture provided in embodiments of this application, the carriers having the optimal performance may be respectively selected for deployment of the uplink and the downlink. In conclusion, according to the communication method provided in embodiments of this application, the user plane and the control plane, or the uplink and the downlink may be deployed on different carriers, so that resources and advantages of the different carriers can be fully used, usage of the resources can be maximized, and a service rate can be increased.

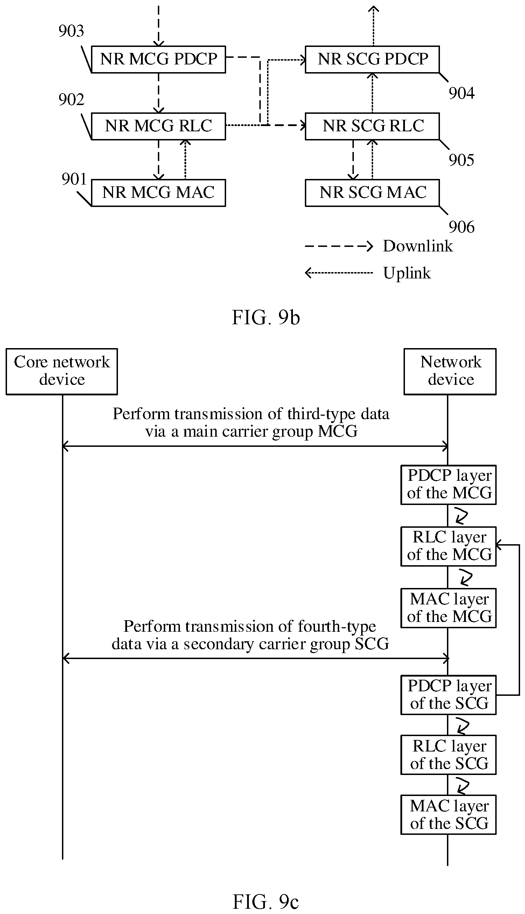

FIG. 9 is a diagram of an architecture of another communication method according to an embodiment of this application. The technical method in embodiments of this application may be specifically implemented in the example system architecture shown in FIG. 9 or a similar system architecture. As shown in FIG. 9, the system architecture may include a core network device and a network device. As shown in FIG. 9, the method may be applied to the system architecture shown in FIG. 2, and the architecture in FIG. 2 may be used to support and perform step S901 in the method procedure shown in FIG. 9. The following provides descriptions from a network device side with reference to FIG. 9. The method may include the following step S901.

Step S901: Perform transmission of third-type data via a main carrier group MCG, and perform transmission of fourth-type data via a secondary carrier group SCG.

Specifically, the third-type data includes uplink data, and the fourth-type data includes downlink data; or the third-type data includes downlink data, and the fourth-type data includes uplink data.

For example, a specific process in which the third-type data includes the uplink data and the fourth-type data includes the downlink data may include the following steps.

FIG. 9a is a diagram of an architecture in which an uplink is deployed on an MCG and a downlink is deployed on an SCG according to an embodiment of this application. First, the network device generates a fifth message through a MAC layer 901 of the MCG, and sends the fifth message to an RLC layer 902 of the MCG. The fifth message is received through the RLC layer of the MCG, a sixth message is generated by using the fifth message, and the sixth message is sent to a PDCP layer 903 of the MCG. Alternatively, the network device generates one part of a fifth message through a MAC layer 901 of the MCG, generates the other part of the fifth message through a MAC layer 906 of the SCG, sends the part of the fifth message to an RLC layer 902 of the MCG, and sends the other part of the fifth message to an RLC layer 905 of the SCG. The part of the fifth message is received through the RLC layer of the MCG, a sixth message is generated by using the part of the fifth message, and the sixth message is sent to a PDCP layer 903 of the MCG. The other part of the fifth message is received through the RLC layer of the SCG, the sixth message is generated by using the other part of the fifth message, and the sixth message is sent to the PDCP layer 903 of the MCG.

Optionally, when sending the foregoing message, the network device further generates a seventh message through a PDCP layer 904 of the SCG, and sends the seventh message to the RLC layer 905 of the SCG. The seventh message is received through the RLC layer of the SCG, an eighth message is generated by using the seventh message, and the eighth message is sent to the MAC layer 906 of the SCG. Alternatively, the network device generates a seventh message through a PDCP layer 904 of the SCG, sends one part of the seventh message to the RLC layer 905 of the SCG, and sends the other part of the seventh message to the RLC layer 902 of the MCG. The part of the seventh message is received through the RLC layer of the SCG, an eighth message is generated by using the part of the seventh message, and the eighth message is sent to the MAC layer 906 of the SCG. The other part of the seventh message is received through the RLC layer of the MCG, a ninth message is generated by using the other part of the seventh message, and the ninth message is sent to the MAC layer 901 of the MCG.

For example, a specific process in which the third-type data includes the downlink data and the fourth-type data includes the uplink data may include the following steps.

FIG. 9b is a diagram of an architecture in which a downlink is deployed on an MCG and an uplink is deployed on an SCG according to an embodiment of this application. First, a fifth message is generated through a PDCP layer 903 of the MCG, and the fifth message is sent to an RLC layer 902 of the MCG. The fifth message is received through the RLC layer of the MCG, a sixth message is generated by using the fifth message, and the sixth message is sent to a MAC layer 901 of the MCG. Alternatively, a fifth message is generated through a PDCP layer 903 of the MCG, one part of the fifth message is sent to an RLC layer 902 of the MCG, and the other part of the fifth message is sent to an RLC layer 905 of the SCG. The part of the fifth message is received through the RLC layer of the MCG, a sixth message is generated by using the part of the fifth message, and the sixth message is sent to a MAC layer 901 of the MCG. The other part of the fifth message is received through the RLC layer of the SCG, the sixth message is generated by using the other part of the fifth message, and the sixth message is sent to a MAC layer 906 of the SCG.

Optionally, a seventh message is generated through the MAC layer 906 of the SCG, and the seventh message is sent to the RLC layer 905 of the SCG. The seventh message is received through the RLC layer of the SCG, an eighth message is generated by using the seventh message, and the eighth message is sent to a PDCP layer 904 of the SCG. Alternatively, one part of a seventh message is generated through the MAC layer 906 of the SCG, the other part of the seventh message is generated through the MAC layer 901 of the MCG, the part of the seventh message is sent to the RLC layer 905 of the SCG, and the other part of the seventh message is sent to the RLC layer 902 of the MCG. The part of the seventh message is received through the RLC layer of the SCG, an eighth message is generated by using the part of the seventh message, and the eighth message is sent to a PDCP layer 904 of the SCG. The other part of the seventh message is received through the RLC layer of the MCG, the eighth message is generated by using the other part of the seventh message, and the eighth message is sent to the PDCP layer 904 of the SCG. Optionally, the foregoing procedure steps may also be used in the system architecture in FIG. 9c. FIG. 9c is a schematic flowchart of still another communication method according to an embodiment of this application.

As shown in the preceding figures, in a conventional CA/DC architecture, the uplink and the downlink can be deployed only on one carrier. When an uplink capability and a downlink capability of the carrier are different, and an uplink service requirement and a downlink service requirement are inconsistent, a conflict between uplink deployment and downlink deployment occurs, and optimal performance cannot be obtained simultaneously. For example, in an FDD and TDD combination scenario, a downlink having a large service volume needs to be deployed on a large-bandwidth TDD. However, an uplink capability of the TDD is weak, and an uplink service needs to be deployed on the FDD. A strong coupling between uplink deployment and downlink deployment may cause performance of either the TDD or the FDD to be affected. In this application, the uplink and the downlink are separately deployed, and carriers having optimal performance for deployment may be respectively selected for the uplink and the downlink.

In conclusion, embodiments of this application are applied to a dual connectivity DC scenario. When an architecture in which the uplink and the downlink are separated is used, an original case in which the uplink and the downlink may be carried on only a same carrier turns into a case in which the uplink is on the MCG, and the downlink is on the SCG; or the downlink is on the SCG, and the uplink is on the MCG. Different from an architecture in a conventional technology in which the uplink and the downlink may be carried on only the same carrier, in embodiments of this application, the uplink and the downlink may be separately deployed, so that carriers having optimal performance may be respectively selected for deployment of the uplink and the downlink. For example, a downlink having a large service volume needs to be deployed on a large-bandwidth SCG. However, an uplink capability of the SCG is weak, an uplink capability of the MCG is strong, and a downlink capability of the MCG is weak. In this case, if a strong coupling between uplink deployment and downlink deployment is still used, performance of either the SCG or the MCG is affected. Therefore, a separation architecture provided in embodiments of this application is required, and the carriers having the optimal performance may be respectively selected for deployment of the uplink and the downlink. In conclusion, to provide a higher service rate, according to the communication method provided in embodiments of this application, the uplink and the downlink may be deployed on different carriers, so that resources and advantages of the different carriers can be fully used, and usage of the resources can be maximized.

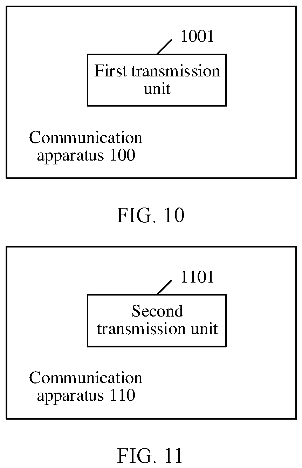

FIG. 10 is a schematic diagram of a structure of a communication apparatus according to an embodiment of this application. A communication apparatus 100 may include a first transmission unit 1001.

The first transmission unit 1001 is configured to: perform transmission of first-type data via a primary carrier cell PCC, and perform transmission of second-type data via a secondary carrier cell SCC.

The first-type data includes control plane data, and the second-type data includes user plane data; or the first-type data includes uplink data, and the second-type data includes downlink data; or the first-type data includes downlink data, and the second-type data includes uplink data.

In a possible implementation, the first transmission unit is specifically configured to:
generate a first message through a packet data convergence protocol PDCP layer of the PCC, and send the first message to a radio link control RLC layer of the PCC; and
receive the first message through the RLC layer of the PCC, generate a second message by using the first message, and send the second message to a media access control MAC layer of the PCC.

In a possible implementation, the first transmission unit is specifically configured to:
generate a third message through a PDCP layer of the SCC, and send the third message to an RLC layer of the SCC; and
receive the third message through the RLC layer of the SCC, generate a fourth message by using the third message, and send the fourth message to a MAC layer of the SCC; or receive the third message through the RLC layer of the SCC, generate a fourth message by using the third message, send one part of the fourth message to a MAC layer of the SCC, and send the other part of the fourth message to the MAC layer of the PCC.

In a possible implementation, the first transmission unit is specifically configured to:
generate a first message through a MAC layer of the PCC, or generate one part of a first message through a MAC layer of the PCC, and generate the other part of the first message through a MAC layer of the SCC, and send the first message to an RLC layer of the PCC; and
receive the first message through the RLC layer of the PCC, generate a second message by using the first message, and send the second message to a PDCP layer of the PCC.

In a possible implementation, the first transmission unit is specifically configured to:
generate a third message through a PDCP layer of the SCC, and send the third message to an RLC layer of the SCC; and
receive the third message through the RLC layer of the SCC, generate a fourth message by using the third message, and send the fourth message to the MAC layer of the SCC; or receive the third message through the RLC layer of the SCC, generate a fourth message by using the third message, send one part of the fourth message to the MAC layer of the SCC, and send the other part of the fourth message to the MAC layer of the PCC.

In a possible implementation, the first transmission unit is specifically configured to:
generate a first message through a PDCP layer of the PCC, and send the first message to an RLC layer of the PCC; and
receive the first message through the RLC layer of the PCC, generate a second message by using the first message, and send the second message to a MAC layer of the PCC; or
receive a first message through an RLC layer of the PCC, generate a second message by using the first message, send one part of the second message to a MAC layer of the PCC, and send the other part of the second message to a MAC layer of the SCC.

In a possible implementation, the first transmission unit is specifically configured to:
generate a third message through the MAC layer of the SCC, or generate one part of a third message through the MAC layer of the SCC, and generate the other part of the third message through the MAC layer of the PCC, and send the third message to an RLC layer of the SCC; and
receive the third message through the RLC layer of the SCC, generate a fourth message by using the third message, and send the fourth message to a PDCP layer of the SCC.

Each unit in FIG. 10 may be implemented by using software, hardware, or a combination of the software and the hardware. A unit implemented by using the hardware may include a logic circuit, an algorithm circuit, an analog circuit, and the like. A unit implemented by using the software may include program instructions, is considered as a software product, is stored in a memory, and may be run by a processor to implement a related function. For details, refer to the foregoing description.

It should be noted that, for functions of the communication apparatus 100 described in the foregoing embodiments of this application, refer to related descriptions in the method embodiments described in FIG. 3 to FIG. 8d. Details are not described herein again.

FIG. 11 is a schematic diagram of a structure of another communication apparatus according to an embodiment of this application. A communication apparatus 110 may include a second transmission unit 1101.

The second transmission unit 1101 is configured to: perform transmission of third-type data via a main carrier group MCG, and perform transmission of fourth-type data via a secondary carrier group SCG.

The third-type data includes uplink data, and the fourth-type data includes downlink data; or the third-type data includes downlink data, and the fourth-type data includes uplink data.

In a possible implementation, the second transmission unit is specifically configured to:
generate a fifth message through a MAC layer of the MCG, and send the fifth message to an RLC layer of the MCG; and
receive the fifth message through the RLC layer of the MCG, generate a sixth message by using the fifth message, and send the sixth message to a PDCP layer of the MCG; or
generate one part of a fifth message through a MAC layer of the MCG, generate the other part of the fifth message through a MAC layer of the SCG, send the part of the fifth message to an RLC layer of the MCG, and send the other part of the fifth message to an RLC layer of the SCG;
receive the part of the fifth message through the RLC layer of the MCG, generate a sixth message by using the part of the fifth message, and send the sixth message to a PDCP layer of the MCG; and
receive the other part of the fifth message through the RLC layer of the SCG, generate the sixth message by using the other part of the fifth message, and send the sixth message to the PDCP layer of the MCG.

In a possible implementation, the second transmission unit is specifically configured to:
generate a seventh message through a PDCP layer of the SCG, and send the seventh message to the RLC layer of the SCG; and
receive the seventh message through the RLC layer of the SCG, generate an eighth message by using the seventh message, and send the eighth message to the MAC layer of the SCG.

In a possible implementation, the second transmission unit is specifically configured to:
generate a seventh message through a PDCP layer of the SCG, send one part of the seventh message to the RLC layer of the SCG, and send the other part of the seventh message to the RLC layer of the MCG;
receive the part of the seventh message through the RLC layer of the SCG, generate an eighth message by using the part of the seventh message, and send the eighth message to the MAC layer of the SCG; and
receive the other part of the seventh message through the RLC layer of the MCG, generate a ninth message by using the other part of the seventh message, and send the ninth message to the MAC layer of the MCG.

In a possible implementation, the second transmission unit is specifically configured to:
generate a fifth message through a PDCP layer of the MCG, and send the fifth message to an RLC layer of the MCG; and
receive the fifth message through the RLC layer of the MCG, generate a sixth message by using the fifth message, and send the sixth message to a MAC layer of the MCG; or
generate a fifth message through a PDCP layer of the MCG, send one part of the fifth message to an RLC layer of the MCG, and send the other part of the fifth message to an RLC layer of the SCG;
receive the part of the fifth message through the RLC layer of the MCG, generate a sixth message by using the part of the fifth message, and send the sixth message to a MAC layer of the MCG; and
receive the other part of the fifth message through the RLC layer of the SCG, generate the sixth message by using the other part of the fifth message, and send the sixth message to a MAC layer of the SCG.

In a possible implementation, the second transmission unit is specifically configured to:
generate a seventh message through the MAC layer of the SCG, and send the seventh message to the RLC layer of the SCG; and
receive the seventh message through the RLC layer of the SCG, generate an eighth message by using the seventh message, and send the eighth message to a PDCP layer of the SCG.

In a possible implementation, the second transmission unit is specifically configured to:
generate one part of a seventh message through the MAC layer of the SCG, generate the other part of the seventh message through the MAC layer of the MCG, send the part of the seventh message to the RLC layer of the SCG, and send the other part of the seventh message to the RLC layer of the MCG;
receive the part of the seventh message through the RLC layer of the SCG, generate an eighth message by using the part of the seventh message, and send the eighth message to a PDCP layer of the SCG; and
receive the other part of the seventh message through the RLC layer of the MCG, generate the eighth message by using the other part of the seventh message, and send the eighth message to the PDCP layer of the SCG.

Each unit in FIG. 11 may be implemented by using software, hardware, or a combination the software and the hardware. A unit implemented by using the hardware may include a logic circuit, an algorithm circuit, an analog circuit, and the like. A unit implemented by using the software may include program instructions, is considered as a software product, is stored in a memory, and may be run by a processor to implement a related function. For details, refer to the foregoing description.

It should be noted that, for functions of the communication apparatus 110 described in the foregoing embodiments of this application, refer to related descriptions in the method embodiments described in FIG. 9 to FIG. 9b. Details are not described herein again.

Embodiments of this application further provide a computer storage medium, where the computer storage medium stores program code. The program code is used to implement some or all of the steps recorded in the foregoing method embodiments.

Embodiments of this application further provide a computer program, where computer program includes instructions, and when the computer program is executed by a computer, the computer may implement some or all of the steps recorded in the foregoing method embodiments.

In the foregoing embodiments, descriptions of each embodiment have different emphasis. For a part that is not described in detail in one embodiment, reference may be made to related descriptions in other embodiments.

It should be noted that, for brief description, the foregoing method embodiments are represented as a series of action combinations. However, persons skilled in the art should understand that this application is not limited to the described action sequence, because according to this application, some of the steps may be performed in other sequences or simultaneously. In addition, persons skilled in the art should also understand that embodiments described in this specification are all preferred embodiments, and involved actions and modules are not necessarily mandatory to this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, or another form.

The foregoing units described as separate parts may or may not be physically separate, and the parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the foregoing integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium, and includes several instructions for instructing a computer device (which may be a personal computer, a server, a network device, or the like, and may specifically be a processor in the computer device) to perform all or a part of the steps of the foregoing methods described in embodiments of this application. The foregoing storage medium includes any medium that can store program code, such as a USB flash drive, a removable hard disk, a magnetic disk, an optical disc, a read-only memory (Read-Only Memory, ROM for short), a random access memory (Random Access Memory, RAM for short), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, applied to a network device, wherein the method comprises:
performing transmission of first-type data via a primary carrier cell PCC, and performing transmission of second-type data via a secondary carrier cell SCC, wherein
the first-type data comprises control plane data, and the second-type data comprises user plane data; or the first-type data comprises uplink data, and the second-type data comprises downlink data; or the first-type data comprises downlink data, and the second-type data comprises uplink data.

2. The method according to claim 1, wherein the first-type data comprises the control plane data, and the second-type data comprises the user plane data; and the performing transmission of first-type data via a primary carrier cell PCC comprises:
generating a first message through a packet data convergence protocol PDCP layer of the PCC, and sending the first message to a radio link control RLC layer of the PCC; and
receiving the first message through the RLC layer of the PCC, generating a second message by using the first message, and sending the second message to a media access control MAC layer of the PCC.

3. The method according to claim 2, wherein the performing transmission of second-type data via a secondary carrier cell SCC comprises:
generating a third message through a PDCP layer of the SCC, and sending the third message to an RLC layer of the SCC; and
receiving the third message through the RLC layer of the SCC, generating a fourth message by using the third message, and sending the fourth message to a MAC layer of the SCC; or receiving the third message through the RLC layer of the SCC, generating a fourth message by using the third message, sending one part of the fourth message to a MAC layer of the SCC, and sending the other part of the fourth message to the MAC layer of the PCC.

4. The method according to claim 1, wherein the first-type data comprises the uplink data, and the second-type data comprises the downlink data; and the performing transmission of first-type data via a primary carrier cell PCC comprises:
generating a first message through a MAC layer of the PCC, or generating one part of a first message through a MAC layer of the PCC, and generating the other part of the first message through a MAC layer of the SCC, and sending the first message to an RLC layer of the PCC; and
receiving the first message through the RLC layer of the PCC, generating a second message by using the first message, and sending the second message to a PDCP layer of the PCC.

5. The method according to claim 4, wherein the performing transmission of second-type data via a secondary carrier cell SCC comprises:
generating a third message through a PDCP layer of the SCC, and sending the third message to an RLC layer of the SCC; and
receiving the third message through the RLC layer of the SCC, generating a fourth message by using the third message, and sending the fourth message to the MAC layer of the SCC; or receiving the third message through the RLC layer of the SCC, generating a fourth message by using the third message, sending one part of the fourth message to the MAC layer of the SCC, and sending the other part of the fourth message to the MAC layer of the PCC.

6. The method according to claim 1, wherein the first-type data comprises the downlink data, and the second-type data comprises the uplink data; and the performing transmission of first-type data via a primary carrier cell PCC comprises:
generating a first message through a PDCP layer of the PCC, and sending the first message to an RLC layer of the PCC; and
receiving the first message through the RLC layer of the PCC, generating a second message by using the first message, and sending the second message to a MAC layer of the PCC; or
receiving the first message through the RLC layer of the PCC, generating a second message by using the first message, sending one part of the second message to a MAC layer of the PCC, and sending the other part of the second message to a MAC layer of the SCC.

7. The method according to claim 6, wherein the performing transmission of second-type data via a secondary carrier cell SCC comprises:
generating a third message through the MAC layer of the SCC, or generating one part of a third message through the MAC layer of the SCC, and generating the other part of the third message through the MAC layer of the PCC, and sending the third message to an RLC layer of the SCC; and
receiving the third message through the RLC layer of the SCC, generating a fourth message by using the third message, and sending the fourth message to a PDCP layer of the SCC.

8. A communication method, applied to a network device, wherein the method comprises:
performing transmission of third-type data via a main carrier group MCG, and performing transmission of fourth-type data via a secondary carrier group SCG, wherein
the third-type data comprises uplink data, and the fourth-type data comprises downlink data; or the third-type data comprises downlink data, and the fourth-type data comprises uplink data.

9. The method according to claim 8, wherein the third-type data comprises the uplink data, and the fourth-type data comprises the downlink data; and the performing transmission of third-type data via a main carrier group MCG comprises:
generating a fifth message through a MAC layer of the MCG, and sending the fifth message to an RLC layer of the MCG; and
receiving the fifth message through the RLC layer of the MCG, generating a sixth message by using the fifth message, and sending the sixth message to a PDCP layer of the MCG; or
generating one part of a fifth message through a MAC layer of the MCG, generating the other part of the fifth message through a MAC layer of the SCG, sending the part of the fifth message to an RLC layer of the MCG, and sending the other part of the fifth message to an RLC layer of the SCG;
receiving the part of the fifth message through the RLC layer of the MCG, generating a sixth message by using the part of the fifth message, and sending the sixth message to a PDCP layer of the MCG; and
receiving the other part of the fifth message through the RLC layer of the SCG, generating the sixth message by using the other part of the fifth message, and sending the sixth message to the PDCP layer of the MCG.

10. The method according to claim 9, wherein the performing transmission of fourth-type data via a secondary carrier group SCG comprises:
generating a seventh message through a PDCP layer of the SCG, and sending the seventh message to the RLC layer of the SCG; and
receiving the seventh message through the RLC layer of the SCG, generating an eighth message by using the seventh message, and sending the eighth message to the MAC layer of the SCG.

11. The method according to claim 9, wherein the performing transmission of fourth-type data via a secondary carrier group SCG comprises:
generating a seventh message through a PDCP layer of the SCG, sending one part of the seventh message to the RLC layer of the SCG, and sending the other part of the seventh message to the RLC layer of the MCG;
receiving the part of the seventh message through the RLC layer of the SCG, generating an eighth message by using the part of the seventh message, and sending the eighth message to the MAC layer of the SCG; and
receiving the other part of the seventh message through the RLC layer of the MCG, generating a ninth message by using the other part of the seventh message, and sending the ninth message to the MAC layer of the MCG.

12. The method according to claim 8, wherein the third-type data comprises the downlink data, and the fourth-type data comprises the uplink data; and the performing transmission of third-type data via a main carrier group MCG comprises:
generating a fifth message through a PDCP layer of the MCG, and sending the fifth message to an RLC layer of the MCG; and
receiving the fifth message through the RLC layer of the MCG, generating a sixth message by using the fifth message, and sending the sixth message to a MAC layer of the MCG; or
generating a fifth message through a PDCP layer of the MCG, sending one part of the fifth message to an RLC layer of the MCG, and sending the other part of the fifth message to an RLC layer of the SCG;
receiving the part of the fifth message through the RLC layer of the MCG, generating a sixth message by using the part of the fifth message, and sending the sixth message to a MAC layer of the MCG; and
receiving the other part of the fifth message through the RLC layer of the SCG, generating the sixth message by using the other part of the fifth message, and sending the sixth message to a MAC layer of the SCG.

13. The method according to claim 12, wherein the performing transmission of fourth-type data via a secondary carrier group SCG comprises:
generating a seventh message through the MAC layer of the SCG, and sending the seventh message to the RLC layer of the SCG; and
receiving the seventh message through the RLC layer of the SCG, generating an eighth message by using the seventh message, and sending the eighth message to a PDCP layer of the SCG.

14. The method according to claim 12, wherein the performing transmission of fourth-type data via a secondary carrier group SCG comprises:
generating one part of a seventh message through the MAC layer of the SCG, generating the other part of the seventh message through the MAC layer of the MCG, sending the part of the seventh message to the RLC layer of the SCG, and sending the other part of the seventh message to the RLC layer of the MCG;
receiving the part of the seventh message through the RLC layer of the SCG, generating an eighth message by using the part of the seventh message, and sending the eighth message to a PDCP layer of the SCG; and
receiving the other part of the seventh message through the RLC layer of the MCG, generating the eighth message by using the other part of the seventh message, and sending the eighth message to the PDCP layer of the SCG.

15. A communication apparatus, comprising:
a first transmission unit, configured to: perform transmission of first-type data via a primary carrier cell PCC, and perform transmission of second-type data via a secondary carrier cell SCC, wherein
the first-type data comprises control plane data, and the second-type data comprises user plane data; or the first-type data comprises uplink data, and the second-type data comprises downlink data; or the first-type data comprises downlink data, and the second-type data comprises uplink data.

16. The apparatus according to claim 15, wherein the first-type data comprises the control plane data, and the second-type data comprises the user plane data; and the transmission unit is specifically configured to:
generate a first message through a packet data convergence protocol PDCP layer of the PCC, and send the first message to a radio link control RLC layer of the PCC; and
receive the first message through the RLC layer of the PCC, generate a second message by using the first message, and send the second message to a media access control MAC layer of the PCC.

17. The apparatus according to claim 16, wherein the transmission unit is specifically configured to:
generate a third message through a PDCP layer of the SCC, and send the third message to an RLC layer of the SCC; and
receive the third message through the RLC layer of the SCC, generate a fourth message by using the third message, and send the fourth message to a MAC layer of the SCC; or receive the third message through the RLC layer of the SCC, generate a fourth message by using the third message, send one part of the fourth message to a MAC layer of the SCC, and send the other part of the fourth message to the MAC layer of the PCC.

18. The apparatus according to claim 15, wherein the first-type data comprises the uplink data, and the second-type data comprises the downlink data; and the transmission unit is specifically configured to:
generate a first message through a MAC layer of the PCC, or generate one part of a first message through a MAC layer of the PCC, and generate the other part of the first message through a MAC layer of the SCC, and send the first message to an RLC layer of the PCC; and
receive the first message through the RLC layer of the PCC, generate a second message by using the first message, and send the second message to a PDCP layer of the PCC.

19. The apparatus according to claim 18, wherein the transmission unit is specifically configured to:
generate a third message through a PDCP layer of the SCC, and send the third message to an RLC layer of the SCC; and
receive the third message through the RLC layer of the SCC, generate a fourth message by using the third message, and send the fourth message to the MAC layer of the SCC; or receive the third message through the RLC layer of the SCC, generate a fourth message by using the third message, send one part of the fourth message to the MAC layer of the SCC, and send the other part of the fourth message to the MAC layer of the PCC.

20. The apparatus according to claim 15, wherein the first-type data comprises the downlink data, and the second-type data comprises the uplink data; and the transmission unit is specifically configured to:
generate a first message through a PDCP layer of the PCC, and send the first message to an RLC layer of the PCC; and
receive the first message through the RLC layer of the PCC, generate a second message by using the first message, and send the second message to a MAC layer of the PCC; or
receive a first message through an RLC layer of the PCC, generate a second message by using the first message, send one part of the second message to a MAC layer of the PCC, and send the other part of the second message to a MAC layer of the SCC.

21. The apparatus according to claim 20, wherein the transmission unit is specifically configured to:
generate a third message through the MAC layer of the SCC, or generate one part of a third message through the MAC layer of the SCC, and generate the other part of the third message through the MAC layer of the PCC, and send the third message to an RLC layer of the SCC; and
receive the third message through the RLC layer of the SCC, generate a fourth message by using the third message, and send the fourth message to a PDCP layer of the SCC.

22. A communication apparatus, comprising:
a transmission unit, configured to: perform transmission of third-type data via a main carrier group MCG, and perform transmission of fourth-type data via a secondary carrier group SCG, wherein
the third-type data comprises uplink data, and the fourth-type data comprises downlink data; or the third-type data comprises downlink data, and the fourth-type data comprises uplink data.

23. The apparatus according to claim 22, wherein the third-type data comprises the uplink data, and the fourth-type data comprises the downlink data; and the transmission unit is specifically configured to:
generate a fifth message through a MAC layer of the MCG, and send the fifth message to an RLC layer of the MCG; and
receive the fifth message through the RLC layer of the MCG, generate a sixth message by using the fifth message, and send the sixth message to a PDCP layer of the MCG; or
generate one part of a fifth message through a MAC layer of the MCG, generate the other part of the fifth message through a MAC layer of the SCG, send the part of the fifth message to an RLC layer of the MCG, and send the other part of the fifth message to an RLC layer of the SCG;
receive the part of the fifth message through the RLC layer of the MCG, generate a sixth message by using the part of the fifth message, and send the sixth message to a PDCP layer of the MCG; and
receive the other part of the fifth message through the RLC layer of the SCG, generate the sixth message by using the other part of the fifth message, and send the sixth message to the PDCP layer of the MCG.

24. The apparatus according to claim 23, wherein the transmission unit is specifically configured to:
generate a seventh message through a PDCP layer of the SCG, and send the seventh message to the RLC layer of the SCG; and
receive the seventh message through the RLC layer of the SCG, generate an eighth message by using the seventh message, and send the eighth message to the MAC layer of the SCG.

25. The apparatus according to claim 23, wherein the transmission unit is specifically configured to:
generate a seventh message through a PDCP layer of the SCG, send one part of the seventh message to the RLC layer of the SCG, and send the other part of the seventh message to the RLC layer of the MCG;
receive the part of the seventh message through the RLC layer of the SCG, generate an eighth message by using the part of the seventh message, and send the eighth message to the MAC layer of the SCG; and
receive the other part of the seventh message through the RLC layer of the MCG, generate a ninth message by using the other part of the seventh message, and send the ninth message to the MAC layer of the MCG.

26. The apparatus according to claim 22, wherein the third-type data comprises the downlink data, and the fourth-type data comprises the uplink data; and the transmission unit is specifically configured to:
generate a fifth message through a PDCP layer of the MCG, and send the fifth message to an RLC layer of the MCG; and
receive the fifth message through the RLC layer of the MCG, generate a sixth message by using the fifth message, and send the sixth message to a MAC layer of the MCG; or
generate a fifth message through a PDCP layer of the MCG, send one part of the fifth message to an RLC layer of the MCG, and send the other part of the fifth message to an RLC layer of the SCG;
receive the part of the fifth message through the RLC layer of the MCG, generate a sixth message by using the part of the fifth message, and send the sixth message to a MAC layer of the MCG; and
receive the other part of the fifth message through the RLC layer of the SCG, generate the sixth message by using the other part of the fifth message, and send the sixth message to a MAC layer of the SCG.

27. The apparatus according to claim 26, wherein the transmission unit is specifically configured to:
generate a seventh message through the MAC layer of the SCG, and send the seventh message to the RLC layer of the SCG; and
receive the seventh message through the RLC layer of the SCG, generate an eighth message by using the seventh message, and send the eighth message to a PDCP layer of the SCG.

28. The apparatus according to claim 26, wherein the transmission unit is specifically configured to:
generate one part of a seventh message through the MAC layer of the SCG, generate the other part of the seventh message through the MAC layer of the MCG, send the part of the seventh message to the RLC layer of the SCG, and send the other part of the seventh message to the RLC layer of the MCG;
receive the part of the seventh message through the RLC layer of the SCG, generate an eighth message by using the part of the seventh message, and send the eighth message to a PDCP layer of the SCG; and
receive the other part of the seventh message through the RLC layer of the MCG, generate the eighth message by using the other part of the seventh message, and send the eighth message to the PDCP layer of the SCG.

29. A computer program, wherein the computer program comprises instructions; and when the instructions are executed by a processor, the method according to any one of claims 1 to 7 or claims 8 to 14 is implemented.

30. A computer-readable storage medium, wherein the computer-readable storage medium stores program code executed by a device; and when the program code is executed by the device, the program code is used to implement the method according to any one of claims 1 to 7 or claims 8 to 14.
